# EUROPÄISCHE PATENTSCHRIFT

(11) **EP 3 719 932 B1**
(45) Veröffentlichungstag und Bekanntmachung des Hinweises auf die Patenterteilung: **05.10.2022**
(21) Anmeldenummer: 19167576.8
(22) Anmeldetag: 05.04.2019
(51) Int. Cl.: H01R 4/62, H01R 43/02, H01R 4/30, H01R 11/12

(54) **STROMVERBINDER, HERSTELLUNGSVERFAHREN UND ELEKTRISCHE VERBINDUNGSANORDNUNG**
POWER CONNECTOR, METHOD OF MANUFACTURING THE SAME, AND ELECTRICAL CONNECTION ASSEMBLY
RACCORDEMENT ÉLECTRIQUE, PROCÉDÉ DE FABRICATION ET DISPOSITIF DE RACCORDEMENT ÉLECTRIQUE

(43) Veröffentlichungstag der Anmeldung: 07.10.2020
(73) Patentinhaber: Intercable Automotive Solutions GmbH, 39031 Bruneck (IT)
(72) Erfinder: Zimmerhofer, Florian, 39030 Percha (BZ) (IT)
(74) Vertreter: Maiwald Patent- und Rechtsanwaltsgesellschaft mbH

(56) Entgegenhaltungen:
- DE-A1-102006 050 708
- DE-A1-102014 012 489
- DE-A1-102016 117 835
- DE-B3-102016 105 768
- DE-T5-112012 003 782

## Beschreibung

### Technisches Gebiet

Die Erfindung betrifft einen elektrischen Stromverbinder, bei dem es sich insbesondere um eine Art Stromschiene handeln kann und der beispielsweise in einem elektrischen Bordnetz eines Fahrzeugs, insbesondere Kraftfahrzeug, eingesetzt werden kann. Ferner betrifft die Erfindung ein Herstellungsverfahren für einen solchen Stromverbinder sowie eine damit ausgestattete Verbindungsanordnung.

### Technischer Hintergrund

Bei elektrischen Verbindungsanordnungen sollen häufig zwei räumlich voneinander getrennte bzw. voneinander beabstandete elektrische Kontaktpartner über einen elektrisch leitfähigen Stromverbinder elektrisch miteinander verbunden werden, um so elektrischen Strom zwischen den Kontaktpartnern zu übertragen. Hierzu sind z.B. Kabel mit Kabelschuhen bekannt, die für eine möglichst einfache Fertigung und/oder Montage über eine lösbare Verbindung, wie etwa eine Schraubverbindung oder ähnliches, befestigt werden können.

Insbesondere in der Fahrzeugtechnik kann es zur Erhöhung der Energieeffizienz des Fahrzeugs bevorzugt sein, am Fahrzeug insgesamt Gewicht einzusparen. Ein heutiges Fahrzeug, z.B. Kraftfahrzeug, weist ein immer umfangreicheres elektrisches bzw. elektronisches Bordnetz mit einer Vielzahl von elektrischen Komponenten bzw. Lasten auf, die entsprechend miteinander verbunden oder vernetzt werden sollen. Zudem verbreiten sich teil- oder vollelektrisch betriebene Kraftfahrzeuge, die umfangreiche Energiespeicher, z.B. in Form von Traktionsbatterien oder ähnlichem, eine Leistungselektronik usw. erfordern und dadurch teilweise eine hohe Stromtragfähigkeit erfordern. Dies erhöht auch den Verbindungs- bzw. Verkabelungsaufwand und erfordert eine entsprechend hohe Anzahl Kabel, wobei die elektrischen Leiter der Kabel eine hohes Eigengewicht aufweisen und damit eine Gewichteinsparung erschweren.

Ein Ansatz zur Gewichtseinsparung bei Kabeln oder ähnlichem ist beispielsweise der Einsatz leicht gewichtiger Metallwerkstoffe bzw. Leichtmetalle, wie etwa Aluminium (Al). Der Einsatz von Aluminium gestaltet sich jedoch insbesondere bei den oben genannten Schraubverbindungen schwierig, da Aluminium zum Kaltfließen neigt und damit nur eine vergleichsweise ungünstige Dauerfestigkeit der Schraubverbindung gewährleisten und über die Zeit zum Lockern derselben führen kann. Zudem neigt Aluminium dazu, in Reaktion mit Luftsauerstoff eine Oxidationsschicht auszubilden, die u.a. den Übergangswiderstand unerwünscht erhöhen kann.

Die DE 10 2006 050 708 A1 beschreibt eine elektrische Flachbandleitung mit einer Öffnung 4 zur Aufnahme eines Anschlussbolzens. Um die Flachbandleitung mit anderen Bauelementen kontaktieren zu können wird vorgeschlagen, dass eine in der Öffnung angeordnete Hülse 8 zumindest entlang ihrer Mantelfläche mit dem Innendurchmesser der Öffnung mittels Reibschweißen stoffschlüssig verbunden ist.

Die DE 10 2016 105 768 B3 betrifft einen Flachleiter, umfassend zumindest eine Durchgangsöffnung und eine an der Durchgangsöffnung stoffschlüssig mit dem Leiter verbundene Reibschweißhülse.

Die DE 11 2012 003 782 T5 beschreibt eine Verpressungsstruktur für Metallelemente.

### Zusammenfassung der Erfindung

Ausführungsformen der Erfindung stellen eine verbesserte Kontaktierungsmöglichkeit eines Stromverbinders zur Verfügung, insbesondere im Hinblick auf eine Dauerfestigkeit einer Verbindung zwischen einem Stromverbinder und einem elektrischen Kontaktpartner.

Die Erfindung betrifft einen elektrischen Stromverbinder gemäß dem Anspruch 1.

Der Stromverbinder eignet sich insbesondere für ein elektrisches Bordnetz, z.B. Energiebordnetz, eines Fahrzeugs, wie etwa einem Kraft- oder Nutzfahrzeug. Der Stromverbinder weist einen bandförmigen Stromleiter auf, wobei unter bandförmig auch streifenförmig oder schienenartig verstanden werden kann. Beispielsweise kann das Band oder der Streifen einen rechteckigen Querschnitt und demnach zwei sich gegenüberliegende Flachseiten und zwei sich gegenüberliegende Schmalseiten aufweisen. Weiter beispielsweise, kann das Band oder der Streifen eine Längserstreckung aufweisen, die deutlich größer als die Breitenerstreckung und die Dickenerstreckung sein kann. Der Stromleiter ist aus einem ersten Metallwerkstoff gefertigt und weist wenigstens eine den Stromleiter in seiner Dickenrichtung durchdringende Durchgangsöffnung auf. Zudem weist der Stromverbinder wenigstens einen Kontakteinsatz auf, der den Stromleiter elektrisch kontaktierend in der Durchgangsöffnung desselben, also des Stromleiters, angeordnet ist. Der Kontakteinsatz erstreckt sich zumindest teilweise über die Dicke des Stromleiters, wobei sich die Erstreckung vorzugsweise auf eine Richtung einer Achse durch die Durchgangsöffnung bezieht. Die Erstreckungslänge des Kontakteinsatzes kann vorzugsweise auch in etwa oder im Wesentlichen der Dicke des Stromleiters entsprechen, wobei wenigstens eine Stirnseite des Kontakteinsatzes zumindest beim einsatzbereit gefertigten Stromverbinder bündig mit der entsprechenden Flachseite des Stromleiters sein kann. Der Stromleiter ist aus einem zu dem ersten Metallwerkstoff zumindest mechanisch festeren, zweiten Metallwerkstoff gefertigt. Es sei angemerkt, dass der Stromleiter und der Kontakteinsatz separat zueinander gefertigt und/oder bereitgestellt werden können, beispielsweise als Halbzeug.

Hierdurch können gleich mehrere Vorteile bewirkt werden. So kann es der Kontakteinsatz beispielsweise zum direkten in Anlage bringen mit einem elektrischen Kontaktpartner dienen können, um diesen über den Stromverbinder elektrisch leitend zu verbinden. Durch die vergleichsweise höhere mechanische Festigkeit, die sich z.B. in einer zumindest geringeren bis vernachlässigbaren Neigung zum Kaltfließen bemerkbar machen kann, kann eine hohe Dauerfestigkeit einer mechanischen Verbindung, z.B. mittels einer Schraubverbindung mit einer Schraube-Mutter-Verbindung, einer Schraubbolzen-Mutter-Verbindung usw., mit dem zu verbindenden Kontaktpartner bewerkstelligt werden. Dadurch wird auch vermieden, dass sich der elektrische Kontakt zwischen dem elektrischen Kontaktpartner und dem Stromverbinder über die Zeit hinweg verschlechtert. Des Weiteren können der Stromleiter und/oder der Kontakteinsatz kostengünstig gefertigt und bereitgestellt werden.

Gemäß einer Weiterbildung kann der Kontakteinsatz mit dem Stromleiter zumindest stoffschlüssig verbunden sein. Durch den Stoffschluss zwischen erstem und zweitem Metallwerkstoff kann diese Verbindung fluiddicht, insbesondere wasserdicht, luftdicht und/oder gasdicht, ausgestaltet werden, so dass z.B. auch ein Kupferwerkstoff und ein Aluminiumwerkstoff miteinander verbunden werden können. Kupfer und Aluminium weisen zueinander eine Potentialdifferenz aufgrund der elektrochemischen Spannungsreiche auf, wobei Kupfer auf der positiven und Aluminium auf der negativen Seite der elektrochemischen Spannungsreihe stehen. Ist die Verbindungsstelle zwischen den beiden Metallwerkstoffen jedoch wasser-, gas- und/oder luftdicht, kann eine Oxidation oder sonstige unerwünschte elektrochemische Reaktion vermieden werden.

In einer Weiterbildung kann der Kontakteinsatz an einer ersten Stirnseite stoffschlüssig mit dem Stromleiter verbunden sein und kann zusätzlich an einer zweiten Stirnseite einen Formschluss mit dem Stromleiter ausbilden. Dadurch wird eine besonders robuste Verbindung zwischen Stromleiter und Kontakteinsatz bewerkstelligt.

In einer Weiterbildung kann der Kontakteinsatz zumindest hülsenförmig oder als Hülse mit einer sich in Dickenrichtung des Stromleiters erstreckenden Durchgangsöffnung ausgebildet sein. Vorzugsweise kann der Kontakteinsatz die Durchgangsöffnung des Stromleiters im Wesentlichen ausfüllen, wobei die beiden Durchgangsöffnungen koaxial sein können. Der Kontakteinsatz kann dadurch, z.B. ähnlich einem Kabelschuh, als mechanisches Befestigungsmittel für eine Schraubenverbindung dienen. Gleichzeitig kann eine innere Mantelfläche des Kontakteinsatzes auch eine Kontaktfläche für eine elektrische Verbindung mit dem Befestigungsmittel, z.B. der Schraube oder dem Schraubenbolzen, bzw. dem elektrischen Kontaktpartner dienen.

Gemäß einer Weiterbildung kann der Kontakteinsatz an wenigstens einer Stirnseite einen Kontaktabschnitt zum in Anlage bringen mit einem elektrischen Kontaktpartner, z.B. auch einem Bund einer Schraube usw., und einen den Kontaktabschnitt radial zumindest teilweise umgebenden Befestigungsabschnitt zum Verbinden mit dem Stromleiter aufweisen. Der Kontaktabschnitt bzw. die Kontaktfläche und/oder der Befestigungsabschnitt können ringförmig ausgebildet sein. Dadurch können ein Abschnitt, an dem ein Werkzeug zum Befestigen des Kontakteinsatzes an dem Stromleiter und eine Kontaktfläche voneinander getrennt werden oder zumindest während der Fertigung voneinander unterscheidbar gemacht werden.

Der Kontakteinsatz weist an wenigstens einer Stirnseite einen Kragen auf, der gegenüber einem Innendurchmesser der Durchgangsöffnung des Stromleiters und/oder des Kontakteinsatzes selbst radial erweitert ist. Der Kragen kann an einer der Stirnseite des Kontakteinsatzes abgewandten Seite eine Auflagefläche zum in Anlage bringen mit dem Stromleiter haben. Dabei kann die Durchgangsöffnung des Kontakteinsatzes einen konstanten Innendurchmesser aufweisen. Vorzugsweise ist der Innendurchmesser an einen Durchmesser einer Schraube, eines Schraubbolzens gemäß einer jeweiligen Normung, wie etwa einer DIN-, ISO- oder EN-Norm, angepasst, um diese durch die Durchgangsöffnung des Kontakteinsatzes führen zu können.

Der Kragen weist einen ersten Abschnitt und einen zweiten Abschnitt auf und der erste Abschnitt steht gegenüber dem zweiten Abschnitt unter Ausbildung einer, vorzugsweise ringförmigen, Kontaktfläche hervor. So kann der erste Abschnitt als stirnseitige Kontaktfläche zur Kontaktierung eines Kontaktpartners dienen. Der zweite Abschnitt kann z.B. als Ansatzfläche für ein Werkzeug bzw. als Bearbeitungsfläche dienen, ohne dass der erste Abschnitt irgendwie negativ beeinträchtigt werden kann, beispielsweise indem ein Werkzeug die Oberfläche beschädigt oder die Oberflächengüte verschlechtert. Dadurch kann der elektrische Kontakt nochmals verbessert werden. Beispielweise können der erste Abschnitt bzw. der zweite Abschnitt dem Kontaktabschnitt bzw. Befestigungsabschnitt entsprechen.

Der Kragen weist zwischen dem ersten Abschnitt und dem zweiten Abschnitt eine Stufe auf. Alternativ dazu, ist der Kragen an einem radialen Randabschnitt angefast sein. Dadurch können der Kontaktabschnitt bzw. die Kontaktfläche und z.B. ein Bereich, an dem ein Werkzeug angesetzt werden soll, noch besser voneinander getrennt werden.

In einer Weiterbildung kann sich der Kontakteinsatz über eine Länge erstrecken, die größer ist als eine Dicke des Stromleiters. In anderen Worten, kann die Länge des Kontakteinsatzes so bemessen sein, dass dieser, wenn er in der Durchgangsöffnung des Stromleiters angeordnet ist, über diesen zumindest an einer Seite, z.B. einer Flachseite, hinaus überstehen kann. Dies ermöglicht z.B. ein Umformen des überstehenden Teils des Kontakteinsatzes.

Gemäß einer Weiterbildung kann der Kontakteinsatz zumindest nietenförmig oder als Niet ausgebildet sein. Das ermöglicht eine zumindest formschlüssige, ggf. auch zusätzlich kraftschlüssige, Verbindung mit dem Stromleiter. Diese Nietverbindung kann auch zusätzlich zu der oben beschriebenen stoffschlüssigen Verbindung ausgebildet sein.

In einer Weiterbildung kann der Kontakteinsatz oberflächenbehandelt, insbesondere chemisch vernickelt, sein. Dadurch kann z.B. die Verträglichkeit des ersten und zweiten Metallwerkstoffs untereinander verbessert und/oder die elektrische Leitfähigkeit erhöht werden. Es ist dadurch auch möglich, die Oberflächengüte des Kontakteinsatzes weiter zu verbessern.

Gemäß einer Weiterbildung kann der erste Metallwerkstoff des Stromleiters ein Aluminiumwerkstoff (Al), ggf. auch eine Aluminiumlegierung, sein. Zusätzlich oder alternativ dazu, kann der zweite Metallwerkstoff des Kontakteinsatzes ein Kupferwerkstoff (Cu), ggf. auch eine Kupferlegierung, sein. Aluminium bietet den Vorteil, bei einer vergleichsweise guten elektrischen Leitfähigkeit ein geringes Eigengewicht aufzuweisen, so dass einerseits eine gute elektrische Leitung möglich ist und andererseits Gewicht eines Stromverbinders eingespart werden kann. Kupfer bietet den Vorteil, dass es eine besonders gute elektrische Leitfähigkeit und gegenüber z.B. Aluminium eine höhere mechanische Festigkeit aufweist und damit eine zumindest deutlich verringerte Neigung zum Kaltfließen hat.

Der Erfindung betrifft ein Verfahren gemäß dem Anspruch 9 zum Herstellen eines Stromverbinders, insbesondere einer Stromschiene, für ein elektrisches Bordnetz eines Fahrzeugs. Das Verfahren sieht die folgenden Schritte vor:
- Es wird ein bandförmiges, streifenförmiges oder schienenartiges Halbzeug bereitgestellt, das aus einem ersten Metallwerkstoff gefertigt ist und in seiner Dickenrichtung von einer Durchgangsöffnung durchdrungen wird.
- Es wird ein aus einem zu dem ersten Metallwerkstoff mechanisch festeren, zweiten Metallwerkstoff gefertigter Kontakteinsatz in der Durchgangsöffnung des bandförmigen Halbzeugs derart angeordnet, dass der Kontakteinsatz den ersten Metallwerkstoff elektrisch leitfähig kontaktiert und sich der Kontakteinsatz zumindest teilweise über die Dicke des Halbzeugs erstreckt.
- Der Kontakteinsatz wird mit dem bandförmigen Halbzeug unter Ausbilden einer unlösbaren Verbindung intermetallisch verbunden.

Durch die vergleichsweise höhere mechanische Festigkeit, die sich z.B. in einer zumindest geringeren bis vernachlässigbaren Neigung zum Kaltfließen bemerkbar machen kann, kann eine hohe Dauerfestigkeit einer mechanischen Verbindung, z.B. mittels einer Schraubverbindung mit einer Schraube-Mutter-Verbindung, einer Schraubbolzen-Mutter-Verbindung usw., mit dem zu verbindenden Kontaktpartner bewerkstelligt werden. Dadurch wird auch vermieden, dass sich der elektrische Kontakt zwischen dem elektrischen Kontaktpartner und dem Stromverbinder über die Zeit hinweg verschlechtert. Des Weiteren können der Stromleiter und/oder der Kontakteinsatz kostengünstig gefertigt und bereitgestellt werden.

Gemäß der Erfindung kann ein an einer Stirnseite des Kontakteinsatzes angeordneter Kragen, der gegenüber einem Innendurchmesser der Durchgangsöffnung des Stromleiters radial erweitert ist, mit einer Flachseite des Halbzeugs, insbesondere mittels Ultraschallschweißen, verschweißt werden. Hierzu kann z.B. an einem radial äußeren Abschnitt des Kragens ein Schweißwerkzeug, beispielsweise ein Ultraschallschweißwerkzeug, wie etwa eine Sonotrode, angesetzt werden. Das Ultraschallschweißen bietet den Vorteil, dass eine evtl. vorhandene Oxidschicht insbesondere des ersten Metallwerkstoffs aufgebrochen und dadurch beseitigt wird, um eine gut elektrisch leitfähige Verbindung zwischen den beiden Metallwerkstoffen zu bewerkstelligen. Darüber hinaus sind auch andere Schweißverfahren, wie etwa Laserschweißen, denkbar.

Gemäß einer Weiterbildung kann eine Stirnseite des Kontakteinsatzes, der sich über eine Länge erstreckt, die größer ist als eine Dicke des Stromleiters, zum Ausbilden einer zumindest nietähnlichen Verbindung umgeformt werden. Dadurch kann ggf. auch zusätzlich zu der stoffschlüssigen Verbindung eine Art Nietverbindung geschaffen werden.

Ein dritter Aspekt der Erfindung betrifft eine elektrische Verbindungsanordnung für ein Fahrzeug. Diese weist einen Stromverbinder in einer oder mehreren der vorstehende beschriebenen Ausführungsvarianten und wenigstens einen elektrischen Kontaktpartner auf, der über ein Befestigungsmittel, z.B. eine Schraube oder einen Schraubenbolzen, das eine Durchgangsöffnung eines Kontakteinsatzes des Stromverbinders durchdringt, befestigt ist.

Diese elektrische Verbindungsanordnung weist eine besonders hohe Dauerfestigkeit bei gleichzeitig guter elektrischer Leitfähigkeit auf.

Ein vierter Aspekt der Erfindung betrifft ein Fahrzeug mit einem Stromverbinder in einer oder mehreren der vorstehend beschriebenen Ausführungsvarianten und/oder mit einer elektrischen Verbindungsanordnung wie vorstehend beschrieben.

Weitere Merkmale, Vorteile und Anwendungsmöglichkeiten der Erfindung ergeben sich aus der nachfolgenden Beschreibung von vorteilhaften Ausführungsbeispielen und den begleitenden Figuren.

### Kurze Beschreibung der Figuren

Nachfolgend werden vorteilhafte Ausführungsbeispiele der Erfindung unter Bezugnahme auf die begleitenden Figuren erläutert. Es zeigen:
- Figur 1: in einer perspektivischen Draufsicht einen elektrischen Stromverbinder gemäß einer Ausführungsform der Erfindung,
- Figur 2: in einer perspektivischen Unteransicht einen elektrischen Stromverbinder gemäß einer Ausführungsform der Erfindung,
- Figur 3: in einer Draufsicht einen elektrischen Stromverbinder gemäß einer Ausführungsform der Erfindung vor dem Ausbilden einer stoffschlüssigen Verbindung zwischen einem Stromleiter und einem Kontakteinsatz,
- Figur 4: den elektrischen Stromverbinder aus Figur 3 in einer Schnittansicht entlang einer Schnittlinie B-B,
- Figur 5: den elektrischen Stromverbinder aus Figur 3 nach dem Ausbilden einer stoffschlüssigen Verbindung zwischen einem Stromleiter und einem Kontakteinsatz,
- Figur 6: in einer Schnittansicht einen elektrischen Stromverbinder gemäß einer Ausführungsform der Erfindung,
- Figur 7: in mehreren Teilfiguren 7A bis 7C ein Verfahren zum Herstellen eines elektrischen Stromverbinders gemäß einer oder mehreren Ausführungsformen der Erfindung,
- Figur 8: in einem Flussdiagramm das Verfahren ein Verfahren zum Herstellen eines elektrischen Stromverbinders gemäß einer oder mehreren Ausführungsformen der Erfindung und
- Figur 9: in einer Explosionsdarstellung eine exemplarische elektrischen Verbindungsanordnung mit einem elektrischen Stromverbinder gemäß einer oder mehreren Ausführungsformen der Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung von Ausführungsformen

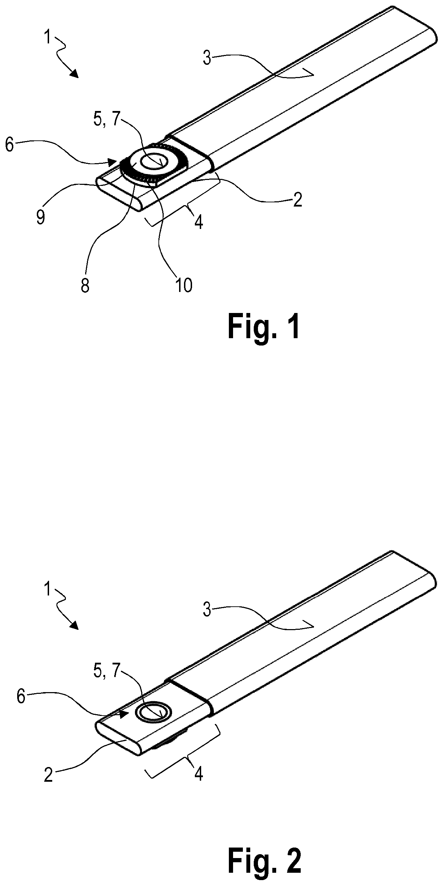

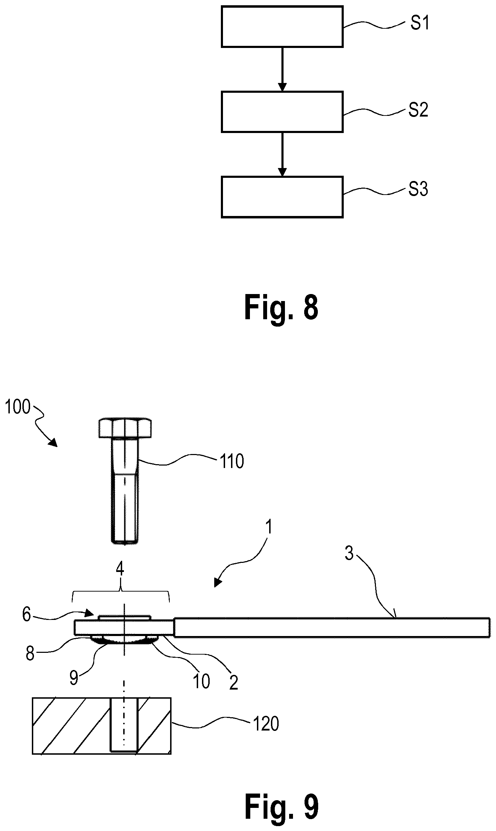

Figur 1 zeigt in einer perspektivischen Draufsicht einen elektrischen Stromverbinder 1 gemäß einer Ausführungsform. Der Stromverbinder 1 ist hier als eine Art Stromschiene ausgebildet und eignet sich insbesondere zum Ausbilden einer elektrischen Verbindungsanordnung 100 (siehe z.B. auch Figur 9), in der ein erster elektrischer Kontaktpartner mit einem zweiten elektrischen Kontaktpartner verbunden werden kann. Der Stromverbinder 1 eignet sich insbesondere auch zum Einsatz in einem elektrischen Bordnetz, z.B. einem Energiebordnetz, eines Fahrzeugs, wie etwa einem Kraftfahrzeug (siehe z.B. auch Figur 10). Dort kann der Stromverbinder 1 beispielsweise elektrische Ströme im Bereich von etwa 10 A bis 1000 A leiten.

Der Stromverbinder 1 weist einen bandförmigen, streifenförmigen, schienenartigen oder ähnlich ausgeformten Stromleiter 2 auf, der hier exemplarisch einen rechteckigen Querschnitt hat. Dementsprechend ist der Stromleiter 2 gemäß Figur 1 eher flach und länglich ausgeformt und verfügt über zwei sich gegenüberliegende Flachseiten und zwei sich gegenüberliegende Schmalseiten. Dabei definiert eine Erstreckung des Vollmaterials zwischen den beiden Flachseiten eine Dicke des Stromleiters 2. Es sei angemerkt, dass der Querschnitt gemäß der gewünschten Stromtragfähigkeit gewählt werden kann. Der Stromleiter 2 ist aus einem ersten Metallwerkstoff gefertigt, wobei dieser hier ein Aluminiumwerkstoff, wie etwa Aluminium (Al) oder eine Aluminiumlegierung, ist. Der Stromleiter 1 weist 2 abschnittsweise eine elektrische Isolierung 3, z.B. in Form eines Isolationsmantels, auf, die an einem äußeren Längsabschnitt 4 ausgespart ist, um durch eine elektrische Kontaktierung mit dem Stromleiter 2 zu ermöglichen. Wie in Figur 1 erkennbar, weist der Stromleiter 1 eine Durchgangsöffnung 5 auf, die in dem nicht isolierten äußeren Längsabschnitt 4 angeordnet ist und dort den Stromleiter 2 in seiner Dickenrichtung durchdringt. Die Durchgangsöffnung 5 hat hier einen kreisrunden Querschnitt.

Es sei angemerkt, dass Figur 1 (aber auch einige der nachfolgend beschriebenen Figuren) lediglich einen Teilabschnitt des Stromverbinders 1 zeigen. Dementsprechend hat dieser vorzugsweise zwei Längsenden, die jeweils den Längsabschnitt 4 und die Durchgangsöffnung 5 aufweisen können.

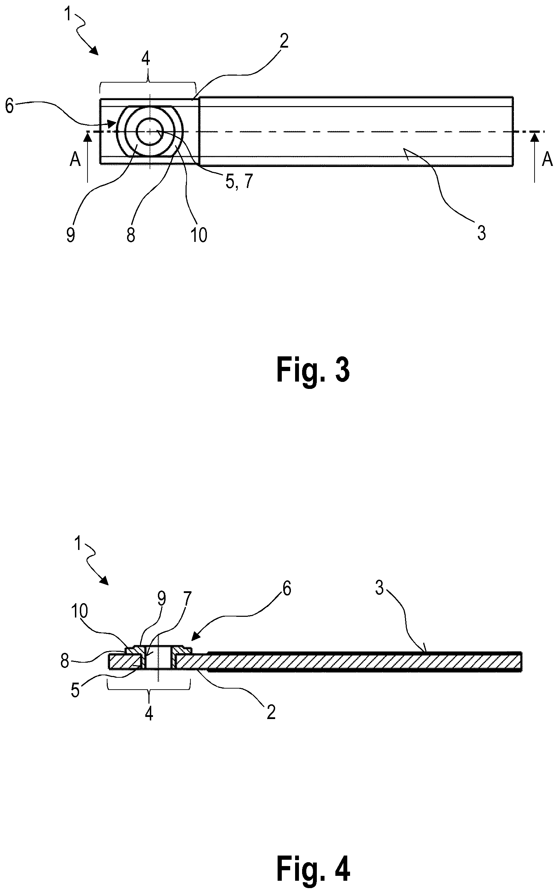

In der Durchgangsöffnung 5 des Stromleiters 2 ist ein Kontakteinsatz 6 angeordnet, der den Stromleiter 2 elektrisch kontaktiert. Der Kontakteinsatz 6 dient zum einen zum elektrischen Kontaktieren des Stromleiters 2 mit einem elektrischen Kontaktpartner und zum anderen zum mechanischen Verbinden mit dem Kontaktpartner und/der einem Befestigungsmittel, wobei das Befestigungsmittel den Kontaktpartner darstellen kann. In Figur 1 ist der Kontakteinsatz 6 bereits fest mit dem Stromleiter 2 verbunden, wobei die Herstellung dieser Verbindung weiter unten noch detaillierter erläutert wird. Der Kontakteinsatz 6 ist aus einem zu dem ersten Metallwerkstoff des Stromleiters 2 unterschiedlichen, zweiten Metallwerkstoff gefertigt, bei dem es sich hier um einen Kupferwerkstoff, wie etwa Kupfer (Cu) oder einer Kupferlegierung, handelt. Des Weiteren sei angemerkt, dass der Kupferwerkstoff aufgrund seiner guten elektrischen Leitfähigkeit sowie seiner gegenüber Aluminium höheren mechanischen Festigkeit und seiner geringeren Neigung zum Fließen, insbesondere Kaltfließen, gewählt ist. Der Kontakteinsatz 6 erstreckt sich zumindest teilweise über die Dicke des Stromleiters 2 (siehe z.B. Figur 4).

Vorzugsweise erstreckt sich der Kontakteinsatz 6 mindestens über die Dicke des Stromleiters 2, um bei Aufbringen einer Kraft, wie etwa einer Klemmkraft einer Schraubverbindung, auf den Kontakteinsatz 6 keine oder zumindest nur eine deutlich geringere Kraft auf eine oder beide der Flachseiten des Stromleiters 2 aufzubringen bzw. eine direkte Krafteinwirkung auf den Stromleiter 2 zumindest weitestgehend zu vermeiden. Zudem weist der Kontakteinsatz 6 eine Durchgangsöffnung 7 auf, die koaxial mit der Durchgangsöffnung 5 des Stromleiters 2 ist und einen kreisrunden hat.

Figur 2 zeigt den Stromverbinder 1 in einer perspektivischen Unteransicht. Es ist erkennbar, dass sich der Kontakteinsatz 6 im Wesentlichen über die Dicke, insbesondere gesamte Dicke, des Stromleiters 2 erstreckt und zumindest in der Ausführungsform gemäß Figur 2 mit einer Stirnseite ungefähr bündig mit der entsprechenden Flachseite des Stromleiters 2 abschließt.

Figur 3 zeigt den Stromverbinder 3 in einer Draufsicht. Der Kontakteinsatz 6 weist einen stirnseitigen Kragen 8 auf, der gegenüber einem Innendurchmesser der Durchgangsöffnung 5 des Stromleiters 2 radial erweitert ist. An dem Kragen 8 bzw. wenigstens an dieser Stirnseite verfügt der Kontakteinsatz über einen Kontaktabschnitt 9 zum in Anlage bringen mit dem elektrischen Kontaktpartner, beispielsweise einem Bund einer Schraube, einer Schraubenmutter usw., und über einen den Kontaktabschnitt 9 radial zumindest teilweise umgebenden Befestigungsabschnitt 10 zum Verbinden mit dem Stromleiter 2. Der Kontaktabschnitt 9 ist als Ringfläche ausgebildet, die hier eine Stirnseite bzw. auch Stirnfläche des Kontakteinsatzes 6 darstellt. Der Kontaktabschnitt 9 umgibt radial umlaufend die Durchgangsöffnung 7 des Kontakteinsatzes 6. Der Befestigungsabschnitt 10 umgibt hier teilweise radial umlaufend den Kontaktabschnitt 9 und bildet hier eine unterbrochene Ringfläche aus, wobei diese auch voll umlaufend ausgebildet sein kann. Der Befestigungsabschnitt 10 dient zum einen zum Ansetzen eines Werkzeugs und zum anderen dem Ausbilden einer dadurch bewirkbaren stoffschlüssigen Verbindung zwischen dem Kontakteinsatz 6 und dem Stromleiter 2, wie dies weiter unten noch detaillierter erläutert wird.

Figur 4 zeigt den Stromverbinder 1 in einer Schnittansicht gemäß der Schnittlinie A-A, wie sie exemplarisch in Figur 3 eingezeichnet ist. Demgemäß ist der Kontakteinsatz 6 hier zumindest hülsenförmig oder als Hülse mit der sich in Dickenrichtung des Stromleiters 2 erstreckenden Durchgangsöffnung 7 ausgebildet. Der Kragen 8 des Kontakteinsatzes 6 liegt mit einer Fläche auf der entsprechenden Flachseite des Stromleiters 2 auf und bildet dadurch einen Formschluss mit demselben in dessen Dickenrichtung. Es ist erkennbar, dass sich der Kontakteinsatz 6 im Wesentlichen über die gesamte Dicke des Stromleiters 2 erstreckt. Weiter ist erkennbar, dass der Kontaktabschnitt 9 über den Befestigungsabschnitt 10, insbesondere bezogen auf die Dickenrichtung des Stromleiters 2, hervorsteht, also demgegenüber exponiert ist. Zwischen dem Kontaktabschnitt 9 und dem Befestigungsabschnitt 10 ist in dieser Ausführungsform eine Stufe vorgesehen. Dadurch sind die beiden Abschnitte voneinander abgegrenzt, so dass das Werkzeug den Kontaktabschnitt 9 nicht beeinträchtigen kann. Infolgedessen weist der Kontaktabschnitt 9 auch nach dem Befestigen über ein an dem Befestigungsabschnitt 10 angesetztes Werkzeug eine hohe Oberflächengüte für eine gute elektrische Kontaktierung mit insbesondere geringem Übergangswiderstand zum Kontaktpartner auf. In Figur 4 ist auch die koaxiale Anordnung der Durchgangsöffnungen 5 und 7 zu erkennen.

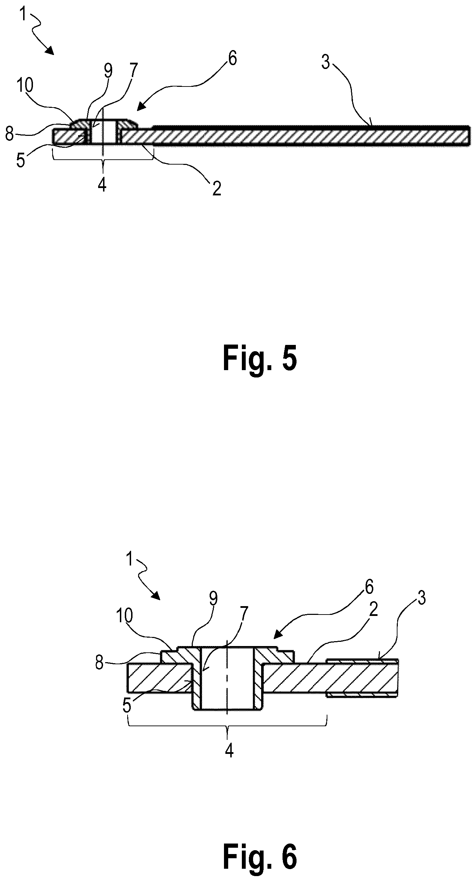

Figur 5 zeigt den Stromverbinder 1 wiederum in einer Schnittansicht, wobei der Schnitt auch hier im Wesentlichen entlang der Schnittlinie A-A aus Figur 3 verläuft. Es sei angemerkt, dass die hier dargestellte Ausführungsform sich im Wesentlichen dadurch von der Ausführungsform gemäß Figur 4 unterscheidet, dass zwischen dem Kontaktabschnitt 9 und dem Befestigungsabschnitt 10 keine Stufe ausgebildet ist. Stattdessen ist ein radialer Randabschnitt des Kragens 8 angefast, wobei die dadurch gebildete Fase gegenüber der Stufe fertigungstechnisch einfacher bewerkstelligt werden kann. In zumindest einigen Ausführungsformen kann die Fase als der Befestigungsabschnitt 10 angesehen werden.

Figur 6 zeigt einen Teilabschnitt des Stromverbinders 1 wiederum in einer Schnittansicht, wobei der Schnitt auch hier im Wesentlichen entlang der Schnittlinie A-A aus Figur 3 verläuft. Es sei angemerkt, dass der Stromverbinder 1 hier während seiner Herstellung, also im noch nicht fertiggestellten Zustand, gezeigt ist. In der hier dargestellten Ausführungsform unterscheidet sich der Stromverbinder 1 im Wesentlichen dadurch von den vorstehenden Ausführungsformen, dass sich der Kontakteinsatz 6 über eine Länge erstreckt, die größer ist als die Dicke des Stromleiters 2. Ferner sei angemerkt, dass der Kontakteinsatz 6 hier als eine Art Niet, insbesondere Niethülse, ausgebildet ist. Dies ermöglicht nach Anordnen des Kontakteinsatzes 6 in der Durchgangsöffnung 5 des Stromleiters 2, wie dies hier in Figur 6 gezeigt ist, ein Umformen im Bereich einer Stirnseite des Kontakteinsatzes 6, die dem Kontaktabschnitt 9 gegenüberliegt. Es sei angemerkt, dass der Kontakteinsatz 6 hier zwar exemplarisch mit der Stufe zwischen dem Kontaktabschnitt 9 und dem Befestigungsabschnitt 10 dargestellt ist, jedoch stattdessen auch die Fase z.B. gemäß Figur 5 aufweisen kann. In anderen Worten können diese Ausführungsformen miteinander kombiniert werden, wobei Figur 6 vorwiegend die Ausgestaltung des Kontakteinsatzes 6 als Niet mit entsprechend größerer Erstreckungslänge veranschaulichen soll.

Der zweite Metallwerkstoff des Kontakteinsatzes 6 kann in einigen Ausführungsformen beispielsweise Cu-HCP, insbesondere Cu-HCP R360, sein. Dieser Kupferwerkstoff stellt ein hochreines und desoxidiertes Kupfer mit einer hohen elektrischen Leitfähigkeit und hohen Wärmeleitfähigkeit dar. Es ist auch gut warm- und/oder kaltumformbar sowie gut schweißbar oder lötbar.

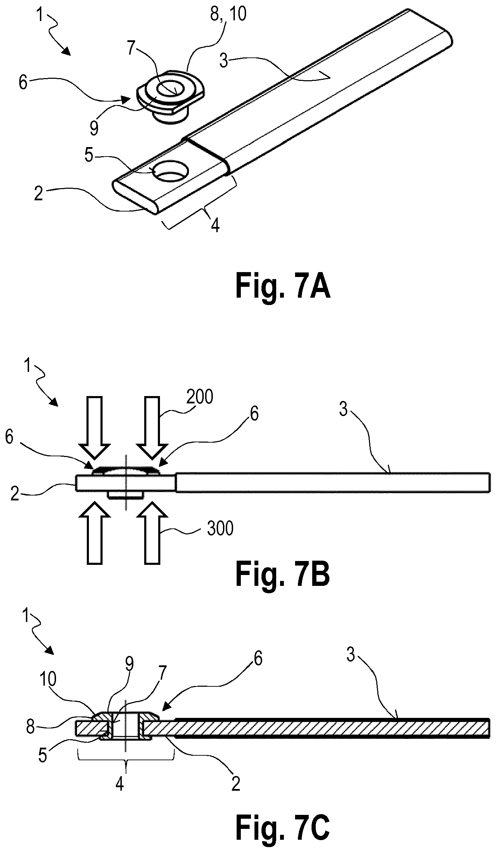

Anhand von Figur 7, die in Teilfiguren 7A bis 7C verschiedene Stufen eines Herstellungsprozesses des Stromverbinders 1 zeigt, soll nachfolgend ein beispielhaftes Verfahren zum Herstellen des Stromverbinders 1 gemäß einer oder mehreren der vorstehend erläuterten Ausführungsformen kurz erläutert werden.

Zunächst wird gemäß Figur 7A in einem Schritt S1 ein bandförmiges, streifenförmiges, schienenartiges usw. Halbzeug bereitgestellt, das im Prinzip den Stromleiter 2 bildet bzw. diesem entspricht. Dementsprechend ist das Halbzeug aus dem ersten Metallwerkstoff gefertigt und wird in seiner Dickenrichtung von der Durchgangsöffnung 5 durchdrungen. Es sei angemerkt, dass das Verfahren weitere optionale Zwischenschritte aufweisen kann, die z.B. die Fertigung des Halbzeugs betreffen können, wie etwa ein Ausformen, z.B. Walzen oder ähnliches, des ersten Metallwerkstoffs, ein Ablängen zum Festlegen der Längserstreckungslänge des Stromleiters 2, ein Bohren oder Stanzen usw. zum Ausbilden der Durchgangsöffnung 5, ein Aufbringen der elektrische Isolierung 3, usw.

Zudem wird in einem optionalen Zwischenschritt auch der Kontakteinsatz 6 bereitgestellt, wie dies in Figur 7A dadurch angedeutet ist, dass der Kontakteinsatz 6 und der Stromleiter 2 als voneinander separate Einzelteile dargestellt sind.

In einem Schritt S2 wird der aus dem zweiten Metallwerkstoff gefertigte Kontakteinsatz 6 in der Durchgangsöffnung 5 des bandförmigen Halbzeugs derart angeordnet, dass der Kontakteinsatz 6 den ersten Metallwerkstoff elektrisch leitfähig kontaktiert und sich der Kontakteinsatz 6 zumindest teilweise über die Dicke des Halbzeugs erstreckt.

Wie in Figur 7B durch zwei Pfeile 200 angedeutet, erfolgt dann in einem Schritt S3 ein Verbinden des Kontakteinsatzes 6 mit dem bandförmigen Halbzeug, also dem Stromleiter 2, unter Ausbilden einer unlösbaren Verbindung. Die zwei Pfeile 200 sollen hier exemplarisch ein Werkzeug, insbesondere Schweißwerkzeug veranschaulichen, bei dem es sich hier vorzugsweise um eine Sonotrode zum Ultraschallschweißen handelt. Dementsprechend kann die unlösbare Verbindung eine Ultraschallschweißverbindung sein. Das Werkzeug 200 wird optional an dem Befestigungsabschnitt 10, also in radialer Richtung außerhalb von dem Kontaktabschnitt 9 des Kontakteinsatzes 6, angesetzt und dann die Schweißverbindung mit dem Stromleiter 2, insbesondere der entsprechenden Flachseite desselben, ausgebildet.

In einem weiteren optionalen Schritt wird, sofern der Kontakteinsatz 6, wie in Figur 7B lediglich exemplarisch angedeutet, als der oben beschriebene Niet ausgebildet ist, der über die Dicke des Stromleiters hervorstehende Abschnitt des Kontakteinsatzes 6 durch ein lediglich durch Pfeile 300 angedeutetes Werkzeug, insbesondere Umformwerkzeug, umgeformt. Dadurch wird die auf den Niet bezogene, optionale zumindest nietähnliche Verbindung ausgebildet. Diese zumindest nietähnliche Verbindung ist in Figur 7C in einer Schnittansicht des Stromverbinders 1 entlang einer Schnittlinie gezeigt, wobei die Schnittlinie in etwa der Schnittlinie A-A aus Figur 3 entspricht.

Figur 8 fasst das vorstehend beschriebene Verfahren mit den Schritten S1 bis S3 in einem Flussdiagramm zusammen. Gegebenenfalls können hier optionale zusätzliche Schritte und auch optionale Zwischenschritte vorgesehen sein, wie dies vorstehend erläutert ist. Beispielsweise ist auch denkbar, dass der gefertigte Stromverbinder 1 in der elektrischen Verbindungsanordnung 100 eingesetzt wird und dementsprechend mit einem oder mehreren elektrischen Kontaktpartnern über z.B. eine Schraubenverbindung oder ähnliches mit diesen verbunden wird.

Figur 9 zeigt in einer grobschematischen Explosionsdarstellung die oben erwähnte Verbindungsanordnung 100 gemäß einer Ausführungsform. Daraus ist ableitbar, dass die mechanische und auch elektrische Verbindung zwischen dem Stromverbinder und einen jeweiligen elektrischen Kontaktpartner 110, 120, der hier lediglich exemplarisch als Schraubbolzen und/oder Anschlussteil angedeutet sind, aber z.B. auch ein elektrischer Kontaktbolzen oder ähnliches sein kann, über z.B. eine Schraubverbindung befestigt ist. Diese elektrische Verbindungsanordnung 100 ist beispielsweise in einem (nicht gezeigten) Fahrzeug, insbesondere Kraftfahrzeug, angeordnet.

### Bezugszeichenliste

- 1: Stromverbinder
- 2: Stromleiter
- 3: elektrische Isolierung
- 4: abisolierter/ausgesparter Längsabschnitt
- 5: Durchgangsöffnung
- 6: Kontakteinsatz
- 7: Durchgangsöffnung
- 8: Kragen
- 9: Kontaktabschnitt
- 10: Befestigungsabschnitt

- 100: elektrische Verbindungsanordnung
- 110: elektrischer Kontaktpartner (z.B. Kontaktbolzen)
- 120: Anschlussteil (z.B. elektrischer Kontaktpartner)
- 200: Werkzeug (z.B. Ultraschallschweißwerkzeug)
- 300: Werkzeug (z.B. Umformwerkzeug)

## Patentansprüche

1. Stromverbinder (1), insbesondere Stromschiene, für ein elektrisches Bordnetz eines Fahrzeugs, mit
- einem bandförmigen Stromleiter (2), der aus einem ersten Metallwerkstoff gefertigt ist und wenigstens eine den Stromleiter (2) in seiner Dickenrichtung durchdringende Durchgangsöffnung (5) aufweist, und
- wenigstens einem Kontakteinsatz (6), der den Stromleiter (2) elektrisch kontaktierend in der Durchgangsöffnung (5) desselben angeordnet ist, sich zumindest teilweise über die Dicke des Stromleiters (2) erstreckt und aus einem zu dem ersten Metallwerkstoff mechanisch festeren, zweiten Metallwerkstoff gefertigt ist,
wobei
der Kontakteinsatz (6) an wenigstens einer Stirnseite einen Kragen (8) aufweist, der gegenüber einem Innendurchmesser der Durchgangsöffnung (5) des Stromleiters (2) radial erweitert ist,
**dadurch gekennzeichnet, dass**
der Kragen (8) einen ersten Abschnitt (9) und einen zweiten Abschnitt (10) aufweist und der erste Abschnitt (9) gegenüber dem zweiten Abschnitt (10) unter Ausbildung einer Kontaktfläche hervorsteht,
der zweite Abschnitt (10) den ersten Abschnitt (9) radial zumindest teilweise umlaufend umgibt,
der zweite Abschnitt (10) zum Ansetzen eines Ultraschallwerkzeugs dient, und der Kragen (8) zwischen dem ersten Abschnitt (9) und dem zweiten Abschnitt (10) eine Stufe aufweist oder an einem radialen Randabschnitt angefast ist.

2. Stromverbinder (1) nach Anspruch 1, wobei der Kontakteinsatz (6) mit dem Stromleiter (2) stoffschlüssig verbunden ist.

3. Stromverbinder (1) nach Anspruch 1 oder 2, wobei der Kontakteinsatz (6) an einer ersten Stirnseite stoffschlüssig mit dem Stromleiter (2) verbunden ist und an einer zweiten Stirnseite einen Formschluss mit dem Stromleiter (2) ausbildet

4. Stromverbinder (1) nach einem der vorhergehenden Ansprüche, wobei der Kontakteinsatz (6) zumindest hülsenförmig oder als Hülse mit einer sich in Dickenrichtung des Stromleiters (2) erstreckenden Durchgangsöffnung (7) ausgebildet ist.

5. Stromverbinder (1) nach einem der vorhergehenden Ansprüche, wobei der Kontakteinsatz (6) an wenigstens einer Stirnseite eden ersten Abschnitt als Kontaktabschnitt (9) zum in Anlage bringen mit einem elektrischen Kontaktpartner (110) und den den Kontaktabschnitt (9) radial zumindest teilweise umgebenden zweiten Abschnitt als Befestigungsabschnitt (10) zum Verbinden mit dem Stromleiter (2) aufweist.

6. Stromverbinder (1) nach einem der vorhergehenden Ansprüche, wobei sich der Kontakteinsatz (6) über eine Länge erstreckt, die größer ist als eine Dicke des Stromleiters (2).

7. Stromverbinder (1) nach einem der vorhergehenden Ansprüche, wobei der Kontakteinsatz (6) zumindest nietenförmig oder als Niet ausgebildet ist.

8. Stromverbinder (1) nach einem der vorhergehenden Ansprüche, wobei der erste Metallwerkstoff des Stromleiters (2) ein Aluminiumwerkstoff und/oder der zweite Metallwerkstoff des Kontakteinsatzes (6) ein Kupferwerkstoff ist.

9. Verfahren zum Herstellen eines Stromverbinders (1) für ein elektrisches Bordnetz eines Fahrzeugs, mit den Schritten:
- Bereitstellen eines bandförmigen Halbzeugs, das aus einem ersten Metallwerkstoff gefertigt ist und in seiner Dickenrichtung von einer Durchgangsöffnung (5) durchdrungen wird,
- Anordnen eines aus einem zu dem ersten Metallwerkstoff unterschiedlichen, zweiten Metallwerkstoff gefertigten Kontakteinsatzes (6) in der Durchgangsöffnung (5) des bandförmigen Halbzeugs derart, dass der Kontakteinsatz (6) den ersten Metallwerkstoff elektrisch leitfähig kontaktiert und sich der Kontakteinsatz (6) zumindest teilweise über die Dicke des Halbzeugs erstreckt,
- Ausbilden eines Kragens (8) an wenigstens einer Stirnseite des Kontakteinsatzes (6), der gegenüber einem Innendurchmesser der Durchgangsöffnung (5) des Stromleiters (2) radial erweitert ist,
- Ausbilden des Kragens (8) derart, dass dieser einen ersten Abschnitt (9) und einen zweiten Abschnitt (10) aufweist und der erste Abschnitt (9) gegenüber dem zweiten Abschnitt (10) unter Ausbildung einer Kontaktfläche hervorsteht, wobei der zweite Abschnitt (10) den ersten Abschnitt (9) radial zumindest teilweise umlaufend umgibt,
- Ausbilden des Kragens (8) derart, dass dieser zwischen dem ersten Abschnitt (9) und dem zweiten Abschnitt (10) eine Stufe aufweist oder an einem radialen Randabschnitt angefast ist, und
- intermetallisches Verbinden des Kontakteinsatzes (6) mit dem bandförmigen Halbzeug unter Ausbilden einer unlösbaren Verbindung, wobei der zweite Abschnitt (10) zum Ansetzen eines Ultraschallwerkzeugs dient und der Kragen mit einer Flachseite des Halbzeugs mittels Ultraschallschweißen verschweißt wird.

10. Verfahren nach Anspruch 9, wobei eine Stirnseite des Kontakteinsatzes (6), der sich über eine Länge erstreckt, die größer ist als eine Dicke des Stromleiters (2), zum Ausbilden einer zumindest nietähnlichen Verbindung umgeformt wird.

11. Elektrische Verbindungsanordnung (100) für ein Fahrzeug, mit einem Stromverbinder (1) nach einem der Ansprüche 1-8 und wenigstens einem elektrischen Kontaktpartner, der über ein Befestigungsmittel, das eine Durchgangsöffnung (5) des wenigstens einen Kontakteinsatzes (6) des Stromverbinders (1) durchdringt, befestigt ist.

## Claims

1. A power connector (1), in particular power bar, for a vehicle electrical system, comprising
- a strip-shaped power conductor (2), which is made of a first metal material and has at least one through-opening (5) penetrating the power conductor (2) in its thickness direction, and
- at least one contact insert (6), which is arranged in the through opening (5) of the power conductor (2) so as to make electrical contact with the latter, extends at least partially over the thickness of the power conductor (2) and is made of a second metal material which is mechanically stronger than the first metal material,
wherein the contact insert (6) comprises, on at least one end face, a collar (8) which is radially widened relative to an inner diameter of the through opening (5) of the power conductor (2),
**characterized in that**
the collar (8) has a first section (9) and a second section (10) and the first section (9) protrudes with respect to the second section (10) to form a contact surface the second section (10) surrounds the first section (9) radially at least partially,
the second section (10) serves for the application of an ultrasonic tool, and
the collar (8) between the first section (9) and the second section (10) has a step or is chamfered at a radial edge section.

2. The power connector (1) according to claim 1, wherein the contact insert (6) is materially connected to the power conductor (2).

3. The power connector (1) according to claim 1 or 2, wherein the contact insert (6) is materially connected to the power conductor (2) at a first end face and forms a form fit with the power conductor (2) at a second end face

4. The power connector (1) according to any one of the preceding claims, wherein the contact insert (6) is formed at least in the shape of a sleeve or as a sleeve with a through opening (7) extending in the thickness direction of the power conductor (2).

5. The power connector (1) according to any one of the preceding claims, wherein the contact insert (6) has, on at least one end face, the first section as a contact section (9) for bringing into contact with an electrical contact partner (110) and the second section, which at least partially surrounds the contact section (9) radially, as a fastening section (10) for connecting to the power conductor (2).

6. The power connector (1) according to any one of the preceding claims, wherein the contact insert (6) extends over a length which is greater than a thickness of the power conductor (2).

7. The power connector (1) according to any one of the preceding claims, wherein the contact insert (6) is at least rivet-shaped or formed as a rivet.

8. The power connector (1) according to any one of the preceding claims, wherein the first metal material of the power conductor (2) is an aluminium material and/or the second metal material of the contact insert (6) is a copper material.

9. A method for manufacturing a power connector (1) for a vehicle electrical system, comprising the steps:
- providing a strip-shaped semi-finished product, which is made of a first metal material and is penetrated in its thickness direction by a through-opening (5),
- arranging a contact insert (6) made of a second metal material which is different from the first metal material in the through-opening (5) of the strip-shaped semi-finished product in such a way that the contact insert (6) makes electrically conductive contact with the first metal material and the contact insert (6) extends at least partially over the thickness of the semi-finished product,
- forming a collar (8) on at least one end face of the contact insert (6), which collar is radially widened relative to an inner diameter of the through opening (5) of the power conductor (2),
- forming the collar (8) in such a way that it has a first section (9) and a second section (10) and the first section (9) protrudes with respect to the second section (10), forming a contact surface, wherein the second section (10) surrounds the first section (9) radially at least partially,
- forming the collar (8) in such a way that it has a step between the first section (9) and the second section (10) or is chamfered at a radial edge section, and
- intermetallically joining the contact insert (6) to the strip-shaped semi-finished product while forming a non-detachable connection, wherein the second section (10) serves to apply an ultrasonic tool and the collar is welded to a flat side of the semi-finished product by means of ultrasonic welding.

10. The method according to claim 9, wherein an end face of the contact insert (6) extending over a length greater than a thickness of the power conductor (2) is formed to form at least a rivet-like joint.

11. An electrical connection arrangement (100) for a vehicle, comprising a power connector (1) according to any one of claims 1-8 and at least one electrical contact partner fixed via a fixing means penetrating a through hole (5) of the at least one contact insert (6) of the power connector (1).

## Revendications

1. Connecteur électrique (1), en particulier rail conducteur, pour un réseau de bord électrique d'un véhicule, comportant
- un conducteur de courant (2) en forme de bande, qui est fabriqué en un premier matériau métallique et présente au moins une ouverture de passage (5) traversant le conducteur de courant (2) dans le sens de son épaisseur, et
- au moins un élément rapporté de contact (6), qui est disposé dans l'ouverture de passage (5) du conducteur de courant (2) de façon à venir en contact électrique avec celui-ci, s'étend au moins en partie sur l'épaisseur du conducteur de courant (2) et est fabriqué en un second matériau métallique mécaniquement plus résistant que le premier matériau métallique,
dans lequel l'élément rapporté de contact (6) présente, sur au moins un côté frontal, un rebord (8), qui est élargi radialement par rapport au diamètre intérieur de l'ouverture de passage (5) du conducteur de courant (2), **caractérisé en ce que**
le rebord (8) présente une première partie (9) et une seconde partie (10) et la première partie (9) dépasse par rapport à la seconde partie (10) en formant une surface de contact,
la seconde partie (10) entoure la première partie (9) radialement au moins en partie de manière périphérique,
la seconde partie (10) sert à appliquer un outil ultrasonore, et le rebord (8) présente une marche entre la première partie (9) et la seconde partie (10) ou est chanfreiné sur une partie de bord radiale.

2. Connecteur électrique (1) selon la revendication 1, dans lequel l'élément rapporté de contact (6) est relié par liaison de matière au conducteur de courant (2).

3. Connecteur électrique (1) selon la revendication 1 ou 2, dans lequel l'élément rapporté de contact (6) est relié par liaison de matière au conducteur de courant (2) sur un premier côté frontal et forme, sur un second côté frontal, une liaison par complémentarité de forme avec le conducteur de courant (2).

4. Connecteur électrique (1) selon l'une des revendications précédentes, dans lequel l'élément rapporté de contact (6) est réalisé au moins en forme de douille ou en tant que douille avec une ouverture de passage (7) s'étendant dans le sens de l'épaisseur du conducteur de courant (2).

5. Connecteur électrique (1) selon l'une des revendications précédentes, dans lequel l'élément rapporté de contact (6) présente, sur au moins un côté frontal, une première partie sous la forme d'une partie de contact (9) pour la mise en contact avec un partenaire de contact électrique (110) et la seconde partie entourant radialement au moins en partie la partie de contact (9) sous la forme d'une partie de fixation (10) pour la liaison au conducteur de courant (2).

6. Connecteur électrique (1) selon l'une des revendications précédentes, dans lequel l'élément rapporté de contact (6) s'étend sur une longueur qui est supérieure à une épaisseur du conducteur de courant (2).

7. Connecteur électrique (1) selon l'une des revendications précédentes, dans lequel l'élément rapporté de contact (6) est réalisé au moins en forme de rivet ou en tant que rivet.

8. Connecteur électrique (1) selon l'une des revendications précédentes, dans lequel le premier matériau métallique du conducteur de courant (2) est un matériau à base d'aluminium et/ou le second matériau métallique de l'élément rapporté de contact (6) est un matériau à base de cuivre.

9. Procédé de fabrication d'un connecteur électrique (1) pour un réseau de bord électrique d'un véhicule, comportant les étapes :
- mise à disposition d'un produit semi-fini en forme de bande, qui est fabriqué en un premier matériau métallique et qui est traversé par une ouverture de passage (5) dans le sens de son épaisseur,
- disposition d'un élément rapporté de contact (6) fabriqué en un second matériau métallique différent du premier matériau métallique dans l'ouverture de passage (5) du produit semi-fini en forme de bande, de telle manière que l'élément rapporté de contact (6) vient en contact électriquement conducteur avec le premier matériau métallique et que l'élément rapporté de contact (6) s'étend au moins en partie sur l'épaisseur du produit semi-fini,
- formation d'un rebord (8) sur au moins un côté frontal de l'élément rapporté de contact (6), qui est élargi radialement par rapport au diamètre intérieur de l'ouverture de passage (5) du conducteur de courant (2),
- formation du rebord (8) de telle manière qu'il présente une première partie (9) et une seconde partie (10) et que la première partie (9) dépasse par rapport à la seconde partie (10) en formant une surface de contact, la seconde partie (10) entourant radialement au moins en partie de manière périphérique la première partie (9),
- formation du rebord (8) de telle manière qu'il présente une marche entre la première partie (9) et la seconde partie (10) ou qu'il est chanfreiné sur une partie de bord radiale, et
- liaison intermétallique de l'élément rapporté de contact (6) avec le produit semi-fini en forme de bande en formant une liaison non libérable, la seconde partie (10) servant à appliquer un outil ultrasonore et le rebord étant soudé à un côté plat du produit semi-fini par soudage par ultrasons.

10. Procédé selon la revendication 9, dans lequel un côté frontal de l'élément rapporté de contact (6), qui s'étend sur une longueur supérieure à une épaisseur du conducteur de courant (2), est déformé pour former une liaison au moins semblable à un rivet.

11. Dispositif de raccordement électrique (100) pour un véhicule, comportant un connecteur électrique (1) selon l'une des revendications 1 à 8 et au moins un partenaire de contact électrique, qui est fixé par le biais d'un moyen de fixation, qui traverse une ouverture de passage (5) de l'au moins un élément rapporté de contact (6) du connecteur électrique (1).
